# EUROPÄISCHE PATENTANMELDUNG

(11) **EP 0 751 012 A1**
(43) Veröffentlichungstag der Anmeldung: **02.01.1997**
(21) Anmeldenummer: 96890103.3
(22) Anmeldetag: 13.06.1996
(51) Int. Cl.: B60C 9/22

(54) **Reifen**

(30) Priorität: 29.06.1995 AT 1106/95
(71) Anmelder: Semperit Reifen Aktiengesellschaft, A-2514 Traiskirchen (AT)
(72) Erfinder: Reither, Christian, Ing., 2393 Sittendorf (AT)
(74) Vertreter: Vinazzer, Edith, Dipl.-Ing.

(57) **Zusammenfassung**

Reifen in Radialbauart mit einem Laufstreifen, einem Paar von Seitenwänden, einem Paar von Wulstbereichen mit Wulstkernen, einer insbesondere einlagigen Karkasse und einem Gürtelverband, welcher mit Stahlcordfestigkeitsträgern verstärkt ist und eine wärmeschrumpffähige Fäden beinhaltende, aus zumindest einem Bandagestreifen gewickelte Bandage aufweist. Der Gürtelverband umfaßt eine einzige, zur Gänze durch eine zumindest einlagige Bandage (6, 6', 6") abgedeckte Stahlcordgürtellage (5, 5', 5").

## Beschreibung

Die vorliegende Erfindung betrifft einen Reifen in Radialbauart mit einem Laufstreifen, einem Paar von Seitenwänden, einem Paar von Wulstbereichen mit Wulstkernen, einer insbesondere einlagigen Karkasse und einem Gürtelverband, welcher mit Stahlcordfestigkeitsträgern verstärkt ist und eine wärmeschrumpffähige Fäden beinhaltende, aus zumindest einem Bandagestreifen gewickelte Bandage aufweist.

Ein moderner, herkömmlicher PKW-Reifen in Radialbauart besitzt einen Gürtelverband, welcher im allgemeinen zwei bis drei Lagen von in eine Gummimischung eingebetteten Stahlcordfestigkeitsträgern aufweist, die mit einer sogenannten Bandage abgedeckt sind. Diese Bandage wird radial außerhalb der Gürtellagen angebracht und wird beispielsweise derart hergestellt, daß ein mit mehreren textilen Fäden, insbesondere Nylon, verstärkter gummierter Bandagestreifen um die Gürtellagen gewickelt wird. Diese auch Spulbandage genannte Gürtelabdeckung kann eine oder mehrere Lagen umfassen und verschiedentlich erstellt bzw. aufgebaut werden.

An moderne PKW-Reifen wird in letzter Zeit zunehmend auch die Anforderung gestellt, ein möglichst geringes Gewicht aufzuweisen, was sich auf das Gesamtgewicht des Fahrzeuges positiv auswirkt und zu einer Verringerung des Treibstoffverbrauches beiträgt. Diesbezüglich sind auch schon Maßnahmen vorgeschlagen worden, beispielsweise die Dicke der Seitenwände und der Innenplatte herabzusetzen sowie die Fadendichte der Stahlcorde in den einzelnen Gürtellagen herabzusetzen. So ist beispielsweise aus der EP-A 0 652 117 ein Reifen bekannt, bei dem im Gürtelverband zwei Stahlcordlagen enthalten sind, deren Fadendichte 30 bis 70 Corde pro 10 cm, insbesondere ≤ 65 Corde pro 10 cm, gewählt werden soll. Gleichzeitig wird eine reduzierte Gesamtgürtelbreite vorgeschlagen. Die zwei Gürtellagen besitzen den üblichen Aufbau mit jeweils innerhalb jeder Lage parallel zueinander verlaufenden Stahlcorden, wobei die Stahlcorde in den beiden Lagen einander kreuzen.

Die Erfindung hat sich nun die Aufgabe gestellt, eine weitere Maßnahme zur Senkung des Reifengewichtes zu setzen, ohne Beeinträchtigung der sonstigen Reifeneigenschaften, insbesondere was die Dauerhaltbarkeit und auch die Hochgeschwindigkeitstauglichkeit des Reifens betrifft.

Gelöst wird die gestellte Aufgabe erfindungsgemäß dadurch, daß der Gürtelverband eine einzige, zur Gänze durch eine zumindest einlagige Bandage abgedeckte Stahlcordgürtellage umfaßt.

Es hat sich überraschenderweise herausgestellt, daß ein PKW-Radialreifen, der lediglich eine einzige Stahlcordgürtellage aufweist, eine Dauerhaltbarkeit und Hochgeschwindigkeitstauglichkeit besitzt, die von einem Reifen mit üblichem Aufbau mit zwei Stahlcordgürtellagen nicht abweicht. Zudem hat sich herausgestellt, daß, entgegen des in der Fachwelt bestehenden Vorurteils, daß zwei Lagen mit einander kreuzenden Festigkeitsträgern im Gürtel für bestimmte Reifeneigenschaften, wie beispielsweise Handling oder Fahrverhalten, unumgänglich notwendig sind, keine signifikanten Auswirkungen auf diese Eigenschaften feststellbar waren. Die erfindungsgemäße Maßnahme schlägt sich zudem in einer merklichen Gewichtsreduktion nieder.

Nach einem weiteren Merkmal der Erfindung weist die Bandage zumindest im Reifenäquatorbereich eine weitere Lage auf, deren Breite vorzugsweise mindestens 20 % der Breite der Stahlcordlage beträgt. Diese Maßnahme ist für Reifen mit einem höheren Speed Index von Vorteil.

Für die Hochgeschwindigkeitstauglichkeit des Reifens ist es ferner günstig, wenn die Bandage zumindest in den Randbereichen der Lage je eine weitere Lage umfaßt, deren Breite mindestens 15 % der Breite der Stahlcordlage beträgt.

Für Reifen, die für sehr hohe Geschwindigkeiten (beispielsweise Speed Index V) geeignet sein sollen hat es sich als günstig herausgestellt, wenn die Bandage im Reifenäquatorbereich drei Lagen und in den Seiten- bzw. Randbereichen zwei Lagen aufweist.

Eine einfache Herstellung einer solchen Bandage ist beispielsweise dadurch möglich, daß die Bandage aus zwei Bandagestreifen erstellt wird, deren Spulbeginn jeweils annähernd halbmittig zwischen der Mittelumfangsebene und den Rändern der Stahlcordgürtellage liegt, wobei jeder Bandagestreifen zum Rand der Stahlcordlage, von dort zurück bis annähernd auf die Höhe des Spulbeginnes des anderen Bandagestreifens und wieder zurück zur Mittelumfangsebene gewickelt ist.

Bei einer weiteren Ausführungsvariante der Erfindung, die ebenfalls für Hochgeschwindigkeitsreifen besonders geeignet ist, umfaßt die Bandage im Reifenäquatorbereich vier Lagen und in den Seiten- bzw. Randbereichen zwei Lagen. Eine solche Bandage läßt sich besonders einfach herstellen, wenn sie aus zwei Bandagestreifen erstellt wird, deren Spulbeginn jeweils im Bereich der Stahlcordlage liegt, wobei die Bandagestreifen unter gegenseitiger Kreuzung bis annähernd halbmittig zwischen Mittelumfangsebene und Stahlcordlagenrand und vom dort aus rückläufig bis an die Ränder der Stahlcordlage gewickelt sind.

Die einzige Stahlcordlage im Gürtelverband kann vorteilhafterweise in bekannter Weise Stahlcorde aufweisen, deren Fadenteilung zwischen 60 bis 130 Fäden pro 10 cm Gürtellagenbreite, insbesondere 60 bis 85 Fäden, beträgt. Ebenso ist eine Stahlcordkonstruktion in dieser einzigen Stahlcordgürtellage einsetzbar, die insbesondere aus zwei bis vier Filamenten aufgebaut ist. Solche Ausgestaltungen und Konstruktionen gewährleisten überraschenderweise die erforderliche Gürtelhaltbarkeit.

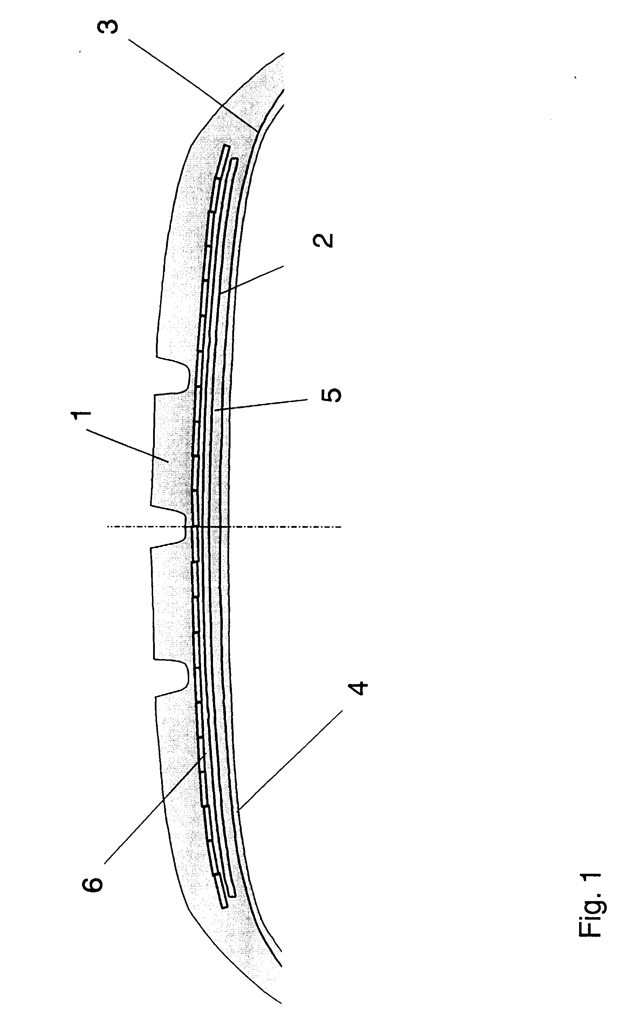

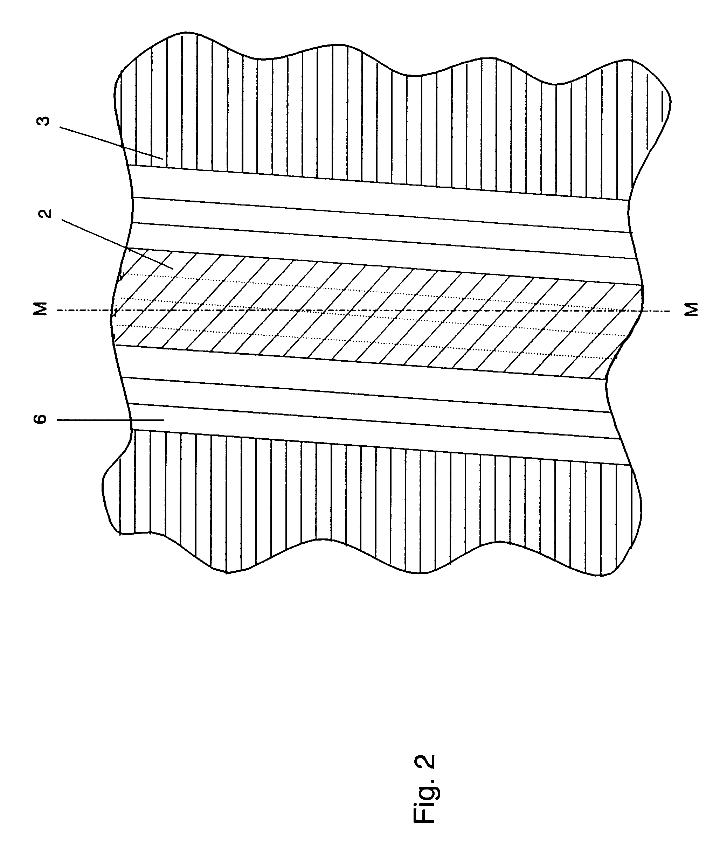

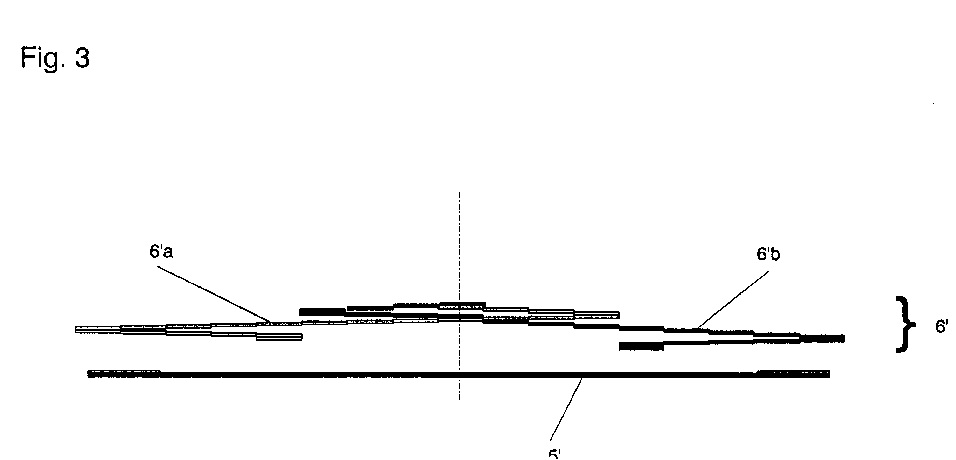

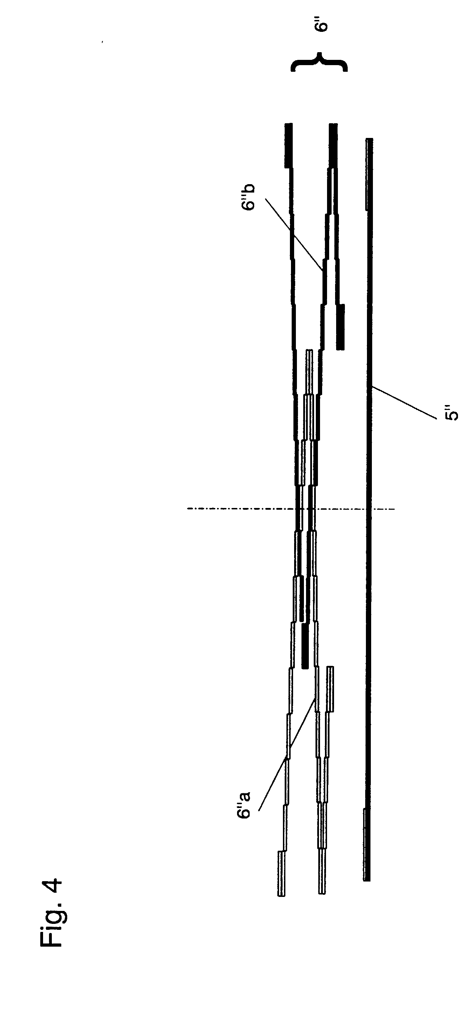

Weitere Merkmale, Vorteile und Einzelheiten der Erfindung werden nun anhand der Zeichnung, die mehrere Ausführungsbeispiele darstellt, näher beschrieben. Sämtliche Zeichnungsfiguren beinhalten schematische Darstellungen. Dabei zeigt Fig. 1 einen Querschnitt durch den Laufstreifenbereich eines Fahrzeugreifens mit einer ersten Ausführungsform der Erfindung, Fig. 2 eine Draufsicht auf den Gürtelverband der Ausführungsvariante gemäß Fig. 1 unter teilweisem Weglassen der Spulbandage, Fig. 3 und Fig. 4 weitere Ausführungsformen von erfindungsgemäßen Gürtelverbänden.

Wie aus Fig. 1 ersichtlich ist umfaßt der Fahrzeugluftreifen im dargestellten Querschnitt einen Laufstreifen 1, einen Gürtelverband 2, eine in dieser Ausführungsform einlagige Karkasse 3 und eine Innenplatte 4. Der Gürtelverband 2 umfaßt eine einzige Stahlcordlage 5 und eine Bandage 6.

Die einzige Stahlcordlage 5 kann in an sich bekannter Weise aufgebaut sein und besteht somit aus einer Vielzahl von parallel zueinander angeordneten, in eine Gummimischung eingebetteten Stahlcorden. Die Stahlcorde können von an sich bekannter Konstruktion, beispielsweise 2 + 2 x 0,25 mm, mit somit vier Stahlfilamenten, oder einer 1 x 2 Konstruktion, mit somit zwei Filamenten, sein. Der bevorzugte Durchmesser der Filamente bei einer 1 x 2 Konstruktion liegt zwischen 0,28 und 0,35 mm, insbesondere 0,30 mm. Beim Einsatz einer 1 x 2 Konstruktion wird bevorzugt ein sogenannter high-tensile Stahl verwendet, dessen Kohlenstoffgehalt mehr als 0,85 % beträgt. Die Stahlcorde werden in einer Fadendichte von 60 bis 130 Corden pro 10 cm, insbesondere 60 bis 80 Corden pro 10 cm, eingesetzt. Die Anordnung im Reifen erfolgt derart, daß die parallel zueinander verlaufenden Stahlcorde mit der Umfangsrichtung M-M des Reifens, wie aus Fig. 2 ersichtlich ist, einen spitzen Winkel von 15 bis 30°, insbesondere 20 bis 25°, einschließen.

Die die einzige Stahlcordlage 5 abdeckende Bandage 6 ist als sogenannte Spulbandage ausgeführt, bei der ein Bandagestreifen, welcher aus in eine Gummimischung eingebetteten in Längsrichtung des Streifens verlaufenden, wärmeschrumpffähigen textilen Festigkeitsträgern besteht, um die Gürtellage 5 gewickelt bzw. gespult wird. Der Bandagestreifen kann beispielsweise mit Nylonfäden, etwa Nylon 6,6, verstärkt sein, wobei eine Anordnung von 7 bis 12 Fäden pro cm Streifenbreite, insbesondere etwa 10 Fäden pro cm, gewählt werden. Der Bandagestreifen selbst hat üblicherweise eine Breite von 10 bis 15 mm.

Wie aus Fig. 1 ersichtlich ist umfaßt die Bandage 6 eine die Stahlcordgürtellage komplett abdeckende und Stoß an Stoß gewickelte Spulbandage. Zusätzlich können zumindest im Zenit bzw. im Äquatorbereich des Reifens aber auch in den Schulterbereichen abschnittweise Bandagelagen aufgebracht werden. Im Reifenzenit sollte diese Lage zumindest über 20 % der Breite der Stahlcordlage verlaufen, in den Randbereichen eine Breite von zumindest 15 % der Breite der Stahlcordlage aufweisen und dort die Ränder der Stahlcordlage abdecken.

Bei dem in Fig. 3 dargestellten Ausführungsbeispiel umfaßt der Gürtelverband neben der einzigen Stahlcordgürtellage 5' eine Bandage 6' aus zwei Bandagestreifen 6'a, 6'b, die durch zwei Spulvorrichtungen (Spulköpfe) aufgebracht wird. Der Spulbeginn für jeden Bandagestreifen 6'a, 6'b liegt etwa halbmittig zwischen der Mittelumfangsebene des Reifens und den seitlichen Rändern der Stahlcordgürtellage 5'. Jeder Bandagestreifen wird Richtung Gürtellagenrand gewickelt, überlappt diesen etwas und wird anschließend Richtung Mittelumfangsebene gewickelt, wo sich die beiden Bandagestreifen 6'a, 6'b kreuzen und ein Weiterspulen bis etwa auf Höhe des ursprünglichen Spulbeginnes des anderen Bandagestreifens erfolgt und von dort ein Rückspulen zur Mittelumfangsebene. Auf diese Weise werden im Mittelbereich drei wirksame Bandagelagen geschaffen, in den Seitenbereichen jeweils zwei.

Fig. 4 zeigt eine Ausführungsform, wo der Spulbeginn der beiden Bandagestreifen 6"a, 6"b im Bereich des Randes der Stahlcordlagen liegt um von dort aus unter Kreuzung der beiden Bandagestreifen 6"a, 6"b bis etwa halbmittig zwischen Mittelumfangsebene und Gürtellagenrand gewickelt wird. Von dort erfolgt eine rückläufige Wicklung der beiden Bandagestreifen 6"a, 6"b wiederum bis in die Randbereiche der Stahlcordgürtellage 5". Durch diese Art der Bandagestreifenwicklung wird eine Bandage geschaffen, die im Mittelbereich des Laufstreifens vier Lagen umfaßt und in den seitlichen Bereichen jeweils drei.

Es wurden Reifen, die mit einem Gürtelverband wie er in Fig. 1 dargestellt ist, der demnach eine einzige Bandagelage und eine einzige Stahlcordlage (Stahlcordkonstruktion 2 + 2 x 0,25 mm, Fadenteilung 80 Fäden pro 10 cm), in der Dimension 175/70 R 13, Speed Index S/T gefertigt, bezüglich Schnellauf und Dauerhaltbarkeit getestet und mit herkömmlichen Reifen des gleichen Typs und der gleichen Dimension verglichen. Die Vergleichsreifen wiesen einen Gürtelverband bestehend aus zwei Stahlcordgürtellagen mit gekreuzten Festigkeitsträgern der Konstruktion 2 x 0,30 mm, Fadenteilung 80 Fäden pro 10 cm, auf. Die erfindungsgemäß hergestellten Reifen bestanden den Hochgeschwindigkeits- und Haltbarkeitstest gleichermaßen wie die Vergleichsreifen. Auch im Handling- und Fahrverhalten war kein Unterschied feststellbar.

Darüber hinaus wurden Reifen mit einer Bandage gemäß Fig. 3 und Fig. 4 sowie einer einzigen Stahlcordgürtellage mit Stahlcorden der Konstruktion 2 + 2 x 0,25 mm, Fadenteilung 80 Fäden pro 10 cm in der Dimension 195/50 R 15, Speed Index V (Höchstgeschwindigkeit 240 km/h) gefertigt und mit Vergleichsreifen gleicher Dimension und gleichem Speed Index, jedoch zwei Lagen Stahlcordfestigkeitsträger (Stahlcordkonstruktion 2 + 2 x 0,25 mm, Fadenteilung 80 Fäden pro 10 cm) und einer einlagigen Nylonvollbandage vergleichen. Bei der Durchführung der Hochgeschwindigkeits- und Haltbarkeitstests wurde sogar festgestellt, daß die erfindungsgemäß ausgeführten Reifen tendenziell besser bestanden als die Vergleichsreifen.

Die Erfindung ist auf die dargestellten Ausführungsbeispiele nicht eingeschränkt. So ist es beispielsweise möglich, die Wicklung der Bandagestreifen so durchzuführen, daß zumindest teilweise eine Überlappung benachbart verlaufender Streifenlagen erfolgt.

## Patentansprüche

1. Reifen in Radialbauart, mit einem Laufstreifen, einem Paar von Seitenwänden, einem Paar von Wulstbereichen mit Wulstkernen, einer insbesondere einlagigen Karkasse und einem Gürtelverband, welcher mit Stahlcordfestigkeitsträgern verstärkt ist und eine wärmeschrumpffähige Fäden beinhaltende, aus zumindest einem Bandagestreifen gewickelte Bandage aufweist, dadurch gekennzeichnet, daß der Gürtelverband eine einzige, zur Gänze durch eine zumindest einlagige Bandage (6, 6', 6") abgedeckte Stahlcordgürtellage (5, 5', 5") umfaßt.

2. Reifen nach Anspruch 1, dadurch gekennzeichnet, daß die Bandage (6', 6") zumindest im Reifenäquatorbereich eine weitere Lage aufweist, deren Breite vorzugsweise mindestens 20 % der Breite der Stahlcordlage (5, 5', 5") beträgt.

3. Reifen nach Anspruch 1 oder Anspruch 2, dadurch gekennzeichnet, daß die Bandage (6', 6") zumindest in den Randbereichen der Stahlcordgürtellage (5', 5") eine weitere Lage umfaßt, deren Breite mindestens 15 % der Breite der Stahlcordlage (5', 5") beträgt.

4. Reifen nach einem der Ansprüche 1 bis 3, dadurch gekennzeichnet, daß die Bandage (6') im Reifenäquatorbereich drei Lagen und in den Seiten- bzw. Randbereichen zwei Lagen aufweist.

5. Reifen nach Anspruch 4, dadurch gekennzeichnet, daß die Bandage (6') aus zwei Bandagestreifen (6'a, 6'b) erstellt ist, deren Spulbeginn jeweils annähernd halbmittig zwischen der Mittelumfangsebene und den Rändern der Stahlcordgürtellage (5') liegt, wobei jeder Bandagestreifen (6'a, 6'b) zum Rand der Stahlcordlage (5'), von dort zurück bis annähernd auf Höhe des Spulbeginnes des anderen Bandagestreifens und wieder zurück zur Mittelumfangsebene gewickelt ist.

6. Reifen nach einem der Ansprüche 1 bis 3, dadurch gekennzeichnet, daß die Bandage (6") im Reifenäquatorbereich vier Lagen und in den Seiten- bzw. Randbereichen zwei Lagen umfaßt.

7. Reifen nach Anspruch 6, dadurch gekennzeichnet, daß die Bandage (6") aus zwei Bandagestreifen (6"a, 6"b) erstellt ist, deren Spulbeginn im Bereich des Randes der Stahlcordlage (5") liegt, wobei die Bandagestreifen (6"a, 6"b) unter gegenseitiger Kreuzung bis annähernd halbmittig zwischen Mittelumfangsebene und Stahlcordlagenrand und vorn dort aus rückläufig bis an die Ränder der Stahlcordlage (5") gewickelt sind.

8. Reifen nach einem der Ansprüche 1 bis 7, dadurch gekennzeichnet, daß die Stahlcorde in der einzigen Stahlcordlage (5, 5', 5") eine Fadenteilung von 60 bis 130 Fäden/10 cm Gürtellagenbreite, insbesondere von 60 bis 85 Fäden, aufweisen.

9. Reifen nach einem der Ansprüche 1 bis 8, dadurch gekennzeichnet, daß die Stahlcorde in der einzigen Stahlcordlage aus zwei bis vier Filamenten zusammengesetzt sind.
